# EUROPEAN PATENT APPLICATION

(11) **EP 3 006 314 A1**
(43) Date of publication of application: **13.04.2016**
(21) Application number: 15797238.1
(22) Date of filing: 11.06.2015
(51) Int. Cl.: B62J 6/02, F21S 8/10, F21W 101/023, F21W 101/10, F21Y 101/00

(54) **STRADDLE-TYPE VEHICLE**

(30) Priority: 11.06.2014 JP 2014120235; 11.06.2014 JP 2014120236; 18.12.2014 JP 2014256408
(71) Applicant: Yamaha Hatsudoki Kabushiki Kaisha, Iwata-shi, Shizuoka 438-8501 (JP)
(72) Inventor: INOUE, Takehiro, Shizuoka 438-8501 (JP); KUBO, Yutaka, Shizuoka 438-8501 (JP); IKEDA, Takeshi, Shizuoka 438-8501 (JP)
(74) Representative: Grünecker Patent- und Rechtsanwälte PartG mbB
(86) International application number: PCT/JP2015/002950
(87) International publication number: WO 2015/190115

(57) **Abstract**

An object is to limit an increase in the size of the vehicle and improve the visibility from the outside of the vehicle while maintaining the light distribution required for the vehicle. A straddled vehicle includes a meter unit supported by the handlebar and configured to turn integrally with the handlebar; at least one highly-directional light unit supported by the handlebar and configured to turn integrally with the handlebar and the meter unit, the at least one highly-directional light unit including a highly-directional light-emitting section configured to emit highly-directional light, and an optical lens section configured to refract light of the highly-directional light-emitting section to form a light distribution, the light distribution formed by the optical lens section being a light distribution of at least part of a main beam or a dipped beam; and a handlebar cover configured to cover at least part of each of the at least one highly-directional light unit, the meter unit and the handlebar, and turn integrally with the meter unit and the handlebar.

## Description

### Technical Field

The present invention relates to a straddled vehicle.

### Background Art

The straddled vehicle disclosed in Patent Literature (hereinafter referred to as "PTL") 1 includes a lamp unit having a light source and a main reflector that reflects light from the light source toward the front of the vehicles, and forms light distribution required for the straddled vehicle, through reflection of the main reflector.

There is a demand for such a straddled vehicle to improve the visibility from the outside using light radiated outward from the lamp unit. More specifically, it is desirable to let people recognize the presence of the straddled vehicle even when the people see the straddled vehicle from forward of the vehicle and from a range in which intensity of light distribution of the lamp unit is low.

The straddled vehicle of PTL 1 includes sub-reflectors smaller than the main reflector on the left and right sides of the main reflector that forms light distribution. In addition, a sub-light-emitting region is provided so that the light of the light source is reflected to the outside by the sub-reflector so as to increase the area of the light emission region of the lamp unit and improve the visibility from the outside of the straddled vehicle while maintaining the light distribution required for the straddled vehicle.

### Citation List

### Patent Literature

PTL 1 Japanese Patent Application Laid-Open No. 2014-159257

### Summary of Invention

### Technical Problem

In the straddled vehicle of PTL 1, the lamp unit includes the main light-emitting region for emitting light reflected by the main reflector and the sub-light-emitting region for emitting light reflected by the sub-reflector. The main light emission region has a size for maintaining the light distribution required for the straddled vehicle as with the case where no sub-light-emitting region is provided. Thus, in the technique of PTL 1, the addition of sub-light-emitting region increases the size of the lamp unit. Moreover, the straddled vehicle of PTL 1 is mounted with the lamp unit that has been made larger in size, so that the straddled vehicle increases in size.

An object of the present invention is to provide a straddled vehicle which can limit an increase in the size of the straddled vehicle and improve the visibility from the outside of the vehicle while maintaining the light distribution required for the vehicle.

### Solution to Problem

A straddled vehicle according to a first aspect of the present invention includes: a body frame; at least one front wheel; a steering shaft turnably supported by the body frame; a handlebar configured to turn integrally with the steering shaft, the handlebar being long in a left-right direction of the body frame; a meter unit supported by the handlebar and configured to turn integrally with the handlebar, the meter unit including a meter section that displays at least information relating to a travelling state; at least one highly-directional light unit supported by the handlebar and configured to turn integrally with the handlebar and the meter unit, the at least one highly-directional light unit including a highly-directional light-emitting section configured to emit highly-directional light, and an optical lens section configured to refract light of the highly-directional light-emitting section to form a light distribution, the light distribution formed by the optical lens section being a light distribution of at least part of a main beam or a dipped beam; and a handlebar cover configured to cover at least part of each of the at least one highly-directional light unit, the meter unit and the handlebar, and turn integrally with the meter unit and the handlebar.

A technical idea is known in which a sub-light-emitting region is added in order to obtain a light distribution for the straddled vehicle and to improve the visibility from the outside of the vehicle with the main light-emitting region left unchanged. With this technical idea, however, the sub-light-emitting region is added to the main light-emitting region, which causes an increase in the size of the straddled vehicle. Under such circumstances, from a different view point of the technical idea, the present inventor first took an approach of reducing the size of the structure for emitting light to the outside to limit an increase in the size of the vehicle while improving the visibility from the outside of the saddled vehicle. As a result, the present inventor has paid particular attention to a highly-directional light including a highly-directional light-emitting section that emits highly-directional light and an optical lens section that refracts the light of the highly-directional light-emitting section and forms a light distribution while the light distribution formed by the optical lens section becomes at least part of a light distribution of the main beam or dipped beam. In general, when the same light distribution is to be formed, a highly-directional light having a highly-directional light-emitting section that emits highly-directional light and an optical lens section can be downsized in comparison with a reflector-type light in which light of a low-directional light emission section is reflected by a reflector and emitted without using the optical lens section. Further, in general, when the same light distribution is to be formed, a highly-directional light having a highly-directional light-emitting section that emits highly-directional light and an optical lens section can be downsized in comparison with a low-directional light in which light of a low-directional light emission section is reflected by a reflector and then emitted through the optical lens section. An optical lens section of a highly-directional light having a highly-directional light-emitting section that emits highly-directional light and an optical lens section is smaller than the optical lens section of the low-directional light. Further, the present inventor has noticed that, in the highly-directional light, when the optical lens refracts highly-directional light and emits the light to the outside, the highly-directional light causes the light to pass through the optical lens section while partially spreading the light because of the nature of an optical lens material, so that the optical lens section itself appears to glow due to the diffused light. The present inventor has thought using the optical lens section that appears to glow due to the diffused light to improve the visibility from the outside of the straddled vehicle. The present inventor has thought that, by providing the optical lens section of the highly-directional light at a higher position by utilizing the small-size, it is possible to limit an increase in the size of the vehicle and improve the visibility from the outside of the saddled vehicle while maintaining the light distribution required for the vehicle.

According to the straddled vehicle of the first aspect of the present invention, the highly-directional light unit that forms a light distribution of at least part of a main beam or a dipped beam has the optical lens section that refracts light of the highly-directional light-emitting section and forms a light distribution. When refracting and emitting light of the highly-directional light-emitting section to the outside, the optical lens section allows the light to pass through the lens while causing part of the light to diffuse due to the nature of the lens material. Thus, with this diffusion light, the optical lens section itself appears to glow.

According to the first aspect of the present invention, first, the optical lens section that refracts light of the highly-directional light-emitting section and forms a light distribution is supported by the handlebar and disposed at such a height that the optical lens section turns integrally with the handlebar, and, has a size enough to form a light distribution of at least part of a main beam or a dipped beam. The optical lens section that has the above-mentioned size and appears to glow is disposed at such a height that it turns integrally with the handlebar, and thus the visibility from the outside of the saddled vehicle can be improved.

According to the first aspect of the present invention, the highly-directional light unit is supported by the handlebar, and turns integrally with the handlebar and the meter unit. In addition, in the highly-directional light unit, the light distribution formed by the optical lens section forms the light distribution of at least part of a main beam or a dipped beam. Thus, the light distribution required for the straddled vehicle can be readily maintained.

In addition, when the same light distribution is to be formed, the optical lens section of the highly-directional light unit of the first aspect that forms a light distribution with use of the optical lens section that refracts light of the highly-directional light-emitting section can be downsized in comparison with a reflector that forms a light distribution with use of a reflector as viewed from the front side of the body frame. In addition, when the same light distribution is to be formed, the optical lens section of the highly-directional light unit of the first aspect can be shorter than a reflector that forms a light distribution with use of a reflector regarding the length in the front-rear direction of the body frame. Thus, the optical lens section of the highly-directional light unit of the first aspect that forms a light distribution with use of the optical lens section that refracts light of the highly-directional light-emitting section can be downsized in comparison with a reflector-type light in which light of a low-directional light emission section is reflected by a reflector and emitted without using the optical lens section. In addition, in the highly-directional light unit of the first aspect that forms a light distribution with use of the optical lens section that refracts light of the highly-directional light-emitting section, the highly-directional light-emitting section that can be formed in a small size is used. Therefore, the highly-directional light unit of the first aspect can be downsized in comparison with a low-directional light using a light of a low-directional light emission section. Thus, with the highly-directional light unit of the first aspect that forms a light distribution with use of the optical lens section that refracts light of the highly-directional light-emitting section, it is possible to limit an increase in the size of the vehicle.

Further, according to the first aspect of the present invention, the handlebar is provided with a meter unit having a meter section that displays information relating to at least the travelling state. In addition, the handlebar cover that covers at least part of at least one highly-directional light unit, the meter unit and the handlebar and integrally turns is provided. Thus, in comparison with the case where the meter unit and the highly-directional light unit are separately covered with the cover, the structure including the meter unit, the highly-directional light unit and the handlebar cover can be downsized, and an increase in the size of the straddled vehicle can be limited.

Furthermore, the present invention can adopt the following aspects.

A straddled vehicle according to a second aspect is the straddled vehicle according to the first aspect in which a rear end of the optical lens section of the at least one highly-directional light unit is located forward of a front end of the meter section of the meter unit in a front-rear direction of the body frame when the handlebar is not steered.

With this configuration, the rear end of the optical lens section is disposed forward of the front end of the meter section in the front-rear direction of the body frame, and consequently the visibility from the outside with the optical lens section can be further improved. Thus, according to the second aspect, it is possible to provide a straddled vehicle which can limit an increase in the size of the straddled vehicle and improve the visibility from the outside of the vehicle while maintaining the light distribution required for the vehicle.

A straddled vehicle according to a third aspect is the straddled vehicle according to the first aspect in which an upper end of the optical lens section of the at least one highly-directional light unit is located above a lower edge of the handlebar in an up-down direction of the body frame.

According to the third aspect, the optical lens section of at least one highly-directional light unit is disposed at a height equal to or greater than that of the handlebar, and consequently the visibility from the outside of the vehicle is improved. In addition, since the optical lens section of at least one highly-directional light unit is disposed at a height equal to or greater than that of the handlebar, a light distribution of a main beam or a dipped beam can be easily formed in comparison with the case where the optical lens section is disposed at a low position. Thus, according to the third aspect, it is possible to provide a straddled vehicle which can limit an increase in the size of the straddled vehicle and improve the visibility from the outside of the vehicle while maintaining the light distribution required for the vehicle.

A straddled vehicle according to a fourth aspect is the straddled vehicle according to the first aspect in which an upper end of the optical lens section of the at least one highly-directional light unit is located above a lower edge of the meter unit in an up-down direction of the body frame.

According to the fourth aspect, since the optical lens section of at least one highly-directional light unit is disposed at a position equal to or higher than that of the meter unit in the up-down direction of the body frame, the visibility from the outside of the vehicle is improved. In addition, since the optical lens section of at least one highly-directional light unit is disposed at a position equal to or higher than that of the meter unit in the up-down direction of the body frame, a light distribution of a main beam or a dipped beam can be easily formed in comparison with the case where the optical lens section is disposed at a low position. Thus, according to the fourth aspect, it is possible to provide a straddled vehicle which can limit an increase in the size of the straddled vehicle and improve the visibility from the outside of the vehicle while maintaining the light distribution required for the vehicle.

A straddled vehicle according to a fifth aspect is the straddled vehicle according to the first aspect in which a lower end of the optical lens section of the at least one highly-directional light unit is located below an upper edge of the handlebar in an up-down direction of the body frame.

According to the fifth aspect, since the optical lens section of at least one highly-directional light unit at least part of which is covered by the handlebar cover is disposed at a height equal to or lower than that of the handlebar, it is possible to suppress increase in the size in the up-down direction of the body frame for installing the highly-directional light unit while improving the visibility from the outside of the vehicle. Thus, according to the fifth aspect, it is possible to provide a straddled vehicle which can limit an increase in the size of the straddled vehicle and improve the visibility from the outside of the vehicle while maintaining the light distribution required for the vehicle.

A straddled vehicle according to a sixth aspect is the straddled vehicle according to the sixth aspect in which a lower end of the optical lens section of the at least one highly-directional light unit is located below an upper edge of the meter section of the meter unit in an up-down direction of the body frame.

According to the sixth aspect, the optical lens section of at least one highly-directional light unit at least part of which is covered by the handlebar cover is disposed at a height equal to or lower than that of the meter unit. Thus, it is possible to suppress increase in the size in the up-down direction of the body frame for installing the highly-directional light unit. Thus, according to the sixth aspect, it is possible to provide a straddled vehicle which can limit an increase in the size of the straddled vehicle and improve the visibility from the outside of the vehicle while maintaining the light distribution required for the vehicle.

A straddled vehicle according to a seventh aspect is the straddled vehicle according to the first aspect further including a lamp unit including the highly-directional light unit, in which: an front end of a bottom part of the meter unit is located above a rear end of the bottom part in an up-down direction of the body frame; a rear end of the lamp unit is located rearward of the front end of the bottom part of the meter unit and forward of the rear end of the bottom part of the meter unit in a front-rear direction of the body frame when the handlebar is not steered; an upper end of the lamp unit is located below the front end of the bottom part of the meter unit and above the rear end of the bottom part of the meter unit in an up-down direction of the body frame when the handlebar is not steered; and at least part of the lamp unit is located on a right side of a left end the meter unit and on a left side of a right end of the meter unit in the left-right direction of the body frame when the handlebar is not steered.

According to the seventh aspect, since the bottom front end of the meter unit is located above the bottom rear end thereof in the up-down direction of the body frame, a space is formed at a position between the bottom front end and the bottom rear end of the meter unit in the up-down direction of the body frame, and between the left end and the right end of the meter unit in the left-right direction of the body frame. Further, according to the seventh aspect, at least one highly-directional light unit is disposed such that at least the rear portion thereof is included in the space. Thus, the structure of the meter unit, the highly-directional light unit and the handlebar cover can be further downsized. Further, it is possible to suppress leakage of light of the highly-directional light unit to part or a periphery of the meter unit. Thus, according to the seventh aspect, it is possible to provide a straddled vehicle which can limit an increase in the size of the straddled vehicle and improve the visibility from the outside of the vehicle while maintaining the light distribution required for the vehicle.

A straddled vehicle according to an eighth aspect is the straddled vehicle according to the first aspect in which: the meter unit includes an electric meter configured to receive an electric signal representing a travelling state and display the travelling state on the meter section; a front end of the meter unit is located forward of a rear end of the at least one highly-directional light unit and rearward of a front end of the optical lens section of the at least one highly-directional light unit in a front-rear direction of the body frame when the handlebar is not steered; a lower edge of the meter unit is located below an upper end of the at least one highly-directional light unit and above a lower end of the at least one highly-directional light unit in an up-down direction of the body frame; and at least part of the at least one highly-directional light unit is located on a right side of a left end of the meter unit and on a left side of a right end of the meter unit in the left-right direction of the body frame when the handlebar is not steered.

In an analog meter, an end of a cable that rotates based on the rotation of the wheel is disposed in the meter, and the speed is displayed on the meter by utilizing the rotation of the cable. In contrast, an electric meter utilizes an electric signal representing the travelling state to display the travelling state on the meter section. Therefore, in comparison with an analog meter, the thickness of an electric meter is small, and a space is formed at a position below the meter unit in the up-down direction of the body frame. According to the eighth aspect, at least one highly-directional light unit is disposed such that the rear portion thereof is included in the space. Thus, the structure of the meter unit, the highly-directional light unit and the handlebar cover can be further downsized, and in addition, it is possible to suppress leakage of light of the highly-directional light unit to part or a periphery of the meter unit. Thus, according to the eighth aspect, it is possible to provide a straddled vehicle which can limit an increase in the size of the straddled vehicle and improve the visibility from the outside of the vehicle while maintaining the light distribution required for the vehicle.

A straddled vehicle according to a ninth aspect is the straddled vehicle according to the first aspect further including a transparent light cover supported by the handlebar, the light cover being configured to cover a front of the optical lens section of the at least one highly-directional light unit in a front-rear direction of the body frame, and turn integrally with the handlebar, the meter unit, the at least one highly-directional light unit, and the handlebar cover.

According to the ninth aspect, with the light cover, the durability of the highly-directional light unit including the optical lens section and the highly-directional light-emitting section can be improved. Since the durability is improved, the structure of the highly-directional light unit, the handlebar cover and the meter unit can be further downsized. Thus, according to the ninth aspect, it is possible to provide a straddled vehicle which can limit an increase in the size of the straddled vehicle and improve the visibility from the outside of the vehicle while maintaining the light distribution required for the vehicle.

A straddled vehicle according to a tenth aspect is the straddled vehicle according to the first aspect in which the optical lens section of the at least one highly-directional light unit is exposed to an outside of the handlebar cover.

According to the tenth aspect, since the optical lens section of at least one highly-directional light unit is exposed to the outside of the handlebar cover, the visibility from the outside of the vehicle can be further improved with the optical lens section that appears to glow. Thus, according to the tenth aspect, it is possible to provide a straddled vehicle which can limit an increase in the size of the straddled vehicle and improve the visibility from the outside of the vehicle while maintaining the light distribution required for the vehicle.

A straddled vehicle according to an eleventh aspect is the straddled vehicle according to the first aspect in which: the at least one highly-directional light unit includes a first highly-directional light unit in which a light distribution formed by a first optical lens section serving as the optical lens section is a light distribution of at least part of one of a main beam and a dipped beam, and a second highly-directional light unit in which a light distribution formed by a second optical lens section serving as the optical lens section is a light distribution of at least part of a beam identical to the one of the main beam and the dipped beam of the first highly-directional light unit; at least part of the first optical lens section is located on a right side of a left end of the meter unit and on a left side of a right end of the meter unit in the left-right direction of the body frame when the handlebar is not steered; at least part of the second optical lens section is located on a right side of the left end of the meter unit and on a left side of the right end of the meter unit in the left-right direction of the body frame when the handlebar is not steered; and a length between the first optical lens section and the second optical lens section is greater than half a smaller one of a minimum width of the first optical lens section and a minimum width of the second optical lens section as viewed from a front side of the body frame when the handlebar is not steered.

According to the eleventh aspect, the first highly-directional light unit and the second highly-directional light unit emit a main beam, or, the first highly-directional light unit and the second highly-directional light unit emit a dipped beam. Further, the first highly-directional light unit and the second highly-directional light unit are disposed with an appropriate interval relative to the minimum width of the optical lens section therebetween such that the entirety of the optical lens section falls within the range from the right end to the left end of the meter unit in the left-right direction of the body frame. As described, with the properly separated first highly-directional light unit and second highly-directional light unit, the visibility from the outside of the vehicle is improved in comparison with a single highly-directional light unit having a light emission region having a size equal to the total size of the light emission regions of the first highly-directional light unit and the second highly-directional light unit. Thus, according to the eleventh aspect, it is possible to provide a straddled vehicle which can limit an increase in the size of the straddled vehicle and improve the visibility from the outside of the vehicle while maintaining the light distribution required for the vehicle.

### Advantageous Effects of Invention

According to the present invention, it is possible to limit an increase in the size of the straddled vehicle and improve the visibility from the outside of the vehicle while maintaining the light distribution required for the vehicle.

### Brief Description of Drawings

FIG. 1 is a side view showing a straddled vehicle according to Embodiment I of the present invention;
FIG. 2 is a front view of the straddled vehicle according to Embodiment 1 of the present invention;
FIG. 3 is a front view of the straddled vehicle according to Embodiment 1 of the present invention during a left turn;
FIG. 4 is a plan view showing a handlebar cover of the straddled vehicle according to Embodiment 1 of the present invention;
FIG. 5 shows the handlebar cover of the straddled vehicle according to Embodiment 1 of the present invention as viewed from a rear side in a front-rear direction of a body frame;
FIG. 6 is a cross-sectional view taken along line A-A of FIG. 4;
FIG. 7 shows a first example (FIG. 7A), a second example (FIG. 7B) and a third example (FIG. 7C) of the highly-directional light unit of the straddled vehicle according to Embodiment 1 of the present invention;
FIG. 8 is a front view showing installation positions of the handlebar and a meter unit of the straddled vehicle according to Embodiment 1 of the present invention;
FIG. 9 is a longitudinal sectional view showing a modification of the handlebar cover of the straddled vehicle according to Embodiment 1 of the present invention;
FIG. 10 is a front view showing a straddled vehicle according to Embodiment 2 of the present invention;
FIG. 11 is a front view showing a modification of an installation position of a highly-directional light unit of the straddled vehicle according to Embodiment 2 of the present invention;
FIG. 12 is a longitudinal sectional view showing the inside of a handlebar cover of a modification of a straddled vehicle according to Embodiment 3 of the present invention;
FIG. 13 is a front view showing a straddled vehicle according to Embodiment 4 of the present invention; and
FIG 14 is a front view showing a straddled vehicle according to Embodiment 5 of the present invention.

### Description of Embodiments

Hereinafter, embodiments of the present invention will be described in detail with reference to the accompanying drawings.

### <Definitions of Directions>

Hereinafter, arrow F in drawings denotes a front direction of straddled vehicle I and arrow B denotes a rear (or back) direction of the straddled vehicle 1. Arrow U denotes an upward direction of the straddled vehicle 1 and arrow D denotes a downward direction of the straddled vehicle 1. Arrow R denotes a right direction of the straddled vehicle 1 and arrow L denotes a left direction of the straddled vehicle 1. Note that the straddled vehicle 1 turns by tilting body frame 2 in a left-right direction of the straddled vehicle 1 with respect to a vertical direction. In addition to the directions of the straddled vehicle 1, directions relative to body frame 2 are defined. Arrow FF in the drawing denotes a front direction relative to body frame 2 and arrow FB denotes a rear direction relative to body frame 2. Arrow FU denotes an upward direction relative to body frame 2 and arrow FD denotes a downward direction relative to body frame 2. Arrow FR denotes a right direction relative to body frame 2 and arrow FL denotes a left direction relative to body frame 2. In the present specification, the front-rear direction of the straddled vehicle 1, the up-down direction of the straddled vehicle 1 and the left-right direction of the straddled vehicle 1 refer to the front-rear, left-right and up-down directions as viewed from a rider who operates the straddled vehicle 1 and are directions relative to straddled vehicle 1. In the specification, the front-rear direction of body frame 2, the up-down direction of body frame 2 and the left-right direction of body frame 2 are front-rear, left-right and up-down directions as viewed from the rider who operates straddled vehicle 1, and are directions relative to body frame 2. In the specification, the upright state refers to a state in which the up-down direction of body frame 2 coincides with the vertical direction without steering handlebar 23. In this state, the direction of straddled vehicle 1 coincides with the direction of body frame 2. It is to be noted that, when straddled vehicle 1 turns by tilting body frame 2 in the left-right direction of straddled vehicle 1 with respect to the vertical direction, the left-right direction of straddled vehicle 1 and the left-right direction of body frame 2 do not coincide with each other, and the up-down direction of straddled vehicle 1 and the up-down direction of body frame 2 also do not coincide with each other. However, when straddled vehicle 1 turns by tilting body frame 2 in the left-right direction with respect to the vertical direction, the front-rear direction of straddled vehicle 1 and the front-rear direction of body frame 2 coincide with each other.

### [Embodiment 1]

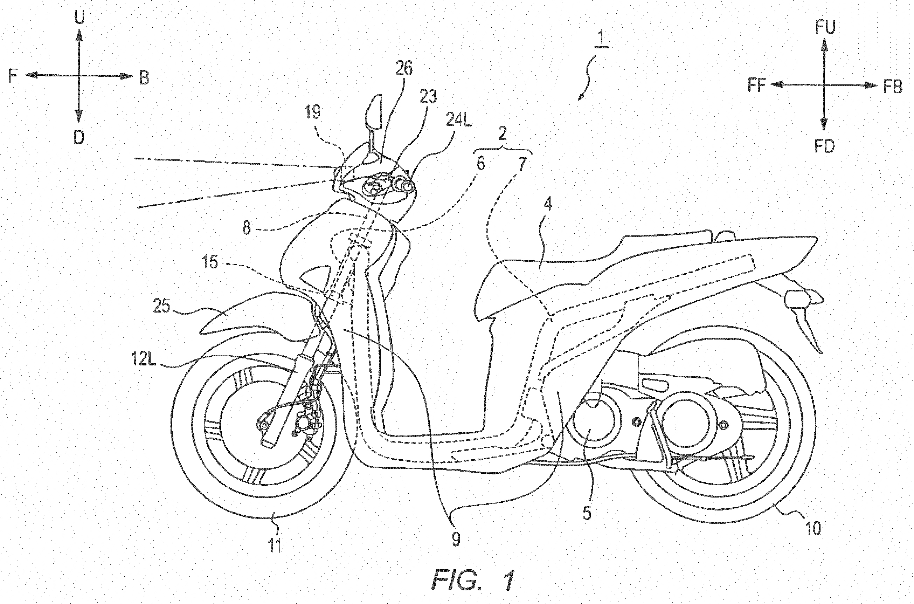

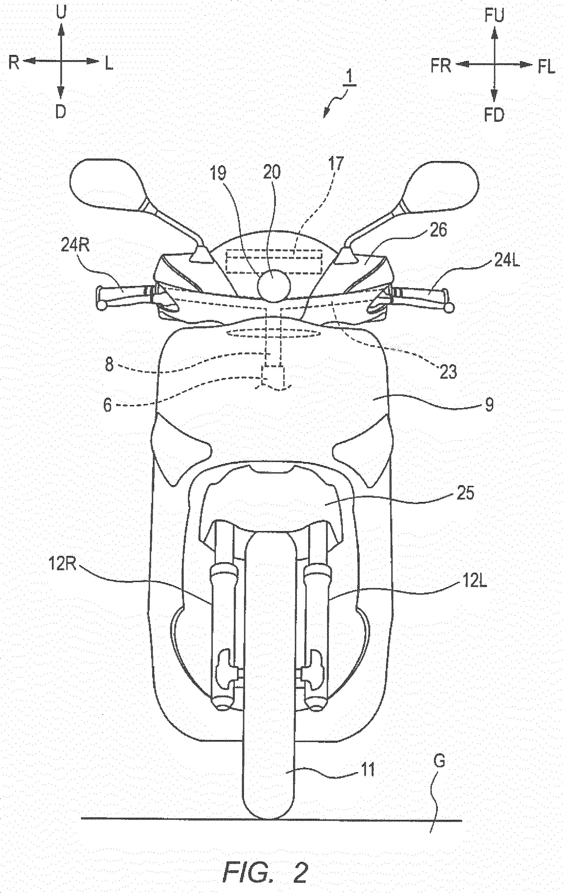

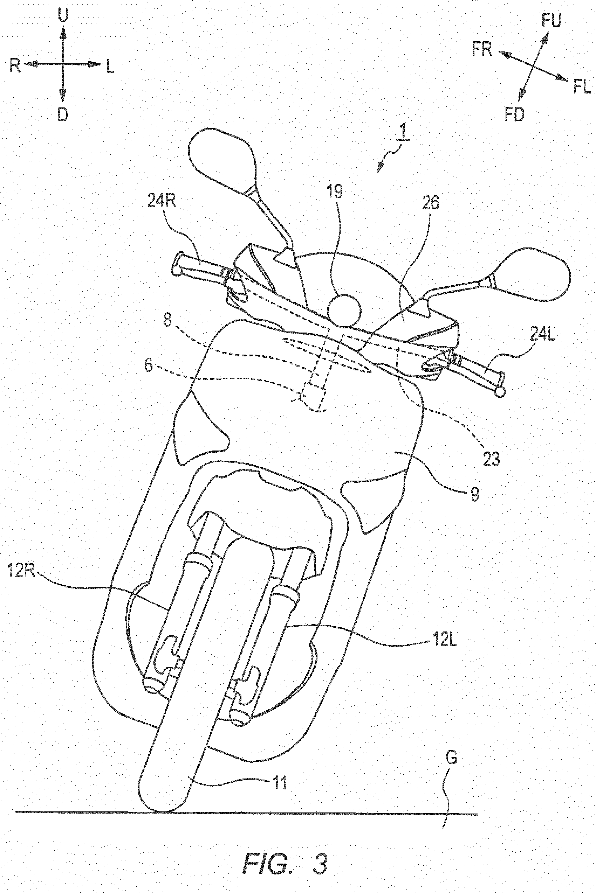

FIG. 1 is a side view showing a straddled vehicle according to Embodiment 1 of the present invention. FIG. 2 is a front view of the straddled vehicle according to Embodiment 1 of the present invention. FIG. 3 is a front view of the straddled vehicle according to Embodiment 1 of the present invention during a left turn.

The straddled vehicle 1 according to Embodiment 1 of the present invention is straddled vehicle 1 having handlebar cover 26.

As shown in FIG. 1 and FIG 2, straddled vehicle 1 includes body frame 2, seat 4, power unit 5, steering shaft 8, body cover 9, rear wheel 10, front wheel 11, left front-wheel support unit 12L, right front-wheel support unit 12R, bracket 15, highly-directional light unit 19, meter unit 17, handlebar 23, left grip 24L, right grip 24R, fender 25, and handlebar cover 26.

Body frame 2 includes head pipe 6 and body frame 7. Body frame 7 is connected to head pipe 6 and disposed behind head pipe 6 in the front-rear direction of body frame 2.

Steering shaft 8 is turnably supported by body frame 2. For example, steering shaft 8 is inserted through a hole of head pipe 6 and turns around a central shaft of head pipe 6.

Handlebar 23 is long in the left-right direction of body frame 2 and turns integrally with steering shaft 8 through steering by the rider. Left grip 24L to be gripped by the rider is disposed on the left side of handlebar 23. Right grip 24R to be gripped by the rider is disposed on the right side of handlebar 23.

Seat 4 is a part on which the rider sits. The rider can sit on seat 4 with the left and right knees brought closer to seat 4, or can straddle seat 4 with the left and right knees separated. Seat 4 is disposed above main body frame 7 in the up-down direction of body frame 2, and is supported by main body frame 7.

Body cover 9 covers at least part of the periphery of head pipe 6 and body frame 2. Body cover 9 extends downward from the left, front and right parts of seat 4 in the up-down direction of body frame 2, and covers part of power unit 5. Body cover 9 is supported by body frame 2.

Power unit 5 includes an engine section, a crank section and a transmission section. Power unit 5 is supported by body frame 7. Power unit 5 drives rear wheel 10 into rotation.

The upper part of left front-wheel support unit 12L and the upper part of right front-wheel support unit 12R are fixedly coupled with steering shaft 8 through bracket 15. When steering shaft 8 turns, center bracket 15, left front-wheel support unit 12L, and right front-wheel support unit 12R turn around the shaft line of steering shaft 8.

Left front-wheel support unit 12L has a telescopic structure, and the lower part is displaced in the up-down direction of body frame 2 with respect to the upper part, for example. The upper part of left front-wheel support unit 12L is supported by body frame 2 through bracket 15 and steering shaft 8, and front wheel 11 is supported by the lower part of left front-wheel support unit 12L. Left front-wheel support unit 12L is located on the left in the left-right direction of body frame 2 relative to steering shaft 8.

Right front-wheel support unit 12R has a telescopic structure, and the lower part is displaced in the up-down direction of body frame 2 with respect to the upper part, for example. The upper part of right front-wheel support unit 12R is supported by body frame 2 through bracket 15 and steering shaft 8, and front wheel 11 is supported by the lower part of right front-wheel support unit 12R. Right front-wheel support unit 12R is located on the right in the left-right direction of body frame 2 relative to steering shaft 8.

The direction in which the lower parts of left front-wheel support unit 12L and right front-wheel support unit 12R are displaced with respect to the upper parts may include the front-rear direction of body frame 2 and the left-right direction of body frame 2 in addition to the up-down direction of body frame 2.

Both right-front and left front-wheel support units 12R and 12L may be internally provided with a spring and a damper. Alternatively, one of right-front and left front-wheel support units 12R and 12L may be provided with a spring and the other may be provided with a damper. Alternatively, one of right-front and left front-wheel support units 12R and 12L may be provided with a spring and a damper and the other may be provided with neither spring nor damper.

Left front-wheel support unit 12L and right front-wheel support unit 12R fixedly support fender 25 that covers the upper part of front wheel 11 in the up-down direction of body frame 2.

As shown in FIG. 3, when the rider steers handlebar 23 to turn straddled vehicle 1 leftward, body frame 2, left front-wheel support unit 12L, right front-wheel support unit 12R and front wheel 11 tilt to the left in the left-right direction of the vehicle with respect to ground G. Similarly, when the rider steers handlebar 23 to turn straddled vehicle 1 rightward, body frame 2, left front-wheel support unit 12L, right front-wheel support unit 12R, and front wheel 11 tilt to the right in the left-right direction of the vehicle with respect to ground G. That is, straddled vehicle 1 of Embodiment 1 is a straddled vehicle that is turnable leftward with body frame 2 tilted leftward in the left-right direction of the vehicle and turnable rightward with body frame 2 tilted rightward in the left-right direction of the vehicle.

### <Handlebar cover>

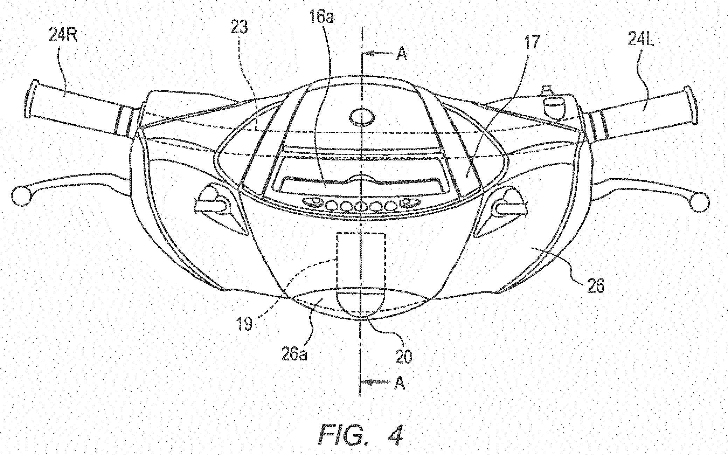

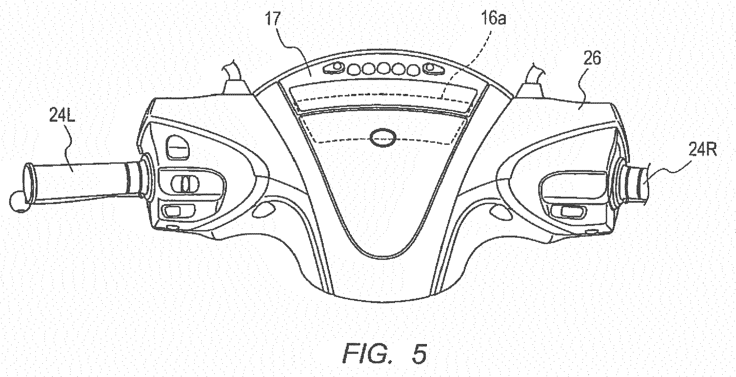

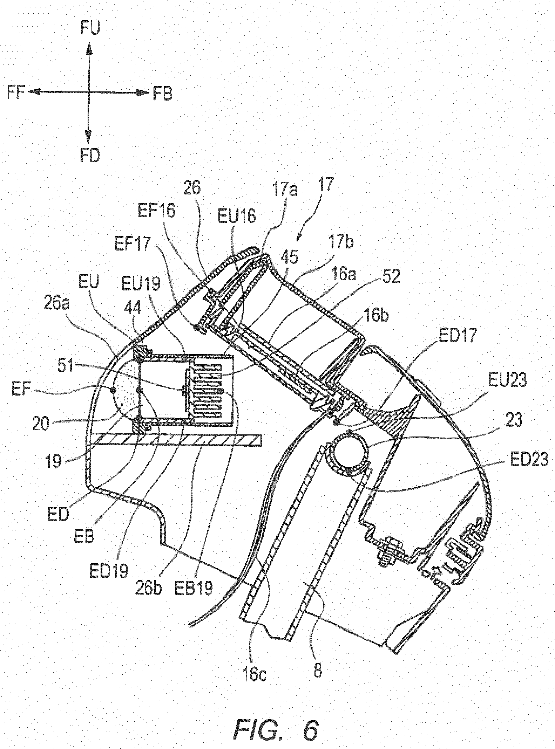

FIG. 4 is a plan view showing a handlebar cover of the straddled vehicle according to Embodiment 1 of the present invention. FIG. 5 shows the handlebar cover of the straddled vehicle according to Embodiment 1 of the present invention as viewed from rearward in the front-rear direction of body frame 2. FIG. 6 is a cross-sectional view taken along line A-A of FIG. 4.

Handlebar cover 26 is provided with meter unit 17 and highly-directional light unit 19. Meter unit 17 is fixed in handlebar cover 26 in such a manner that the display surface of meter unit 17 is exposed to the outside. Handlebar cover 26 covers at least part of each of handlebar 23, meter unit 17, and highly-directional light unit 19. Light-transmissive light cover 26a is provided at a front of handlebar cover 26. Together with handlebar cover 26, light cover 26a is supported by handlebar 23. It is to be noted that light cover 26a may be separated from handlebar cover 26, and may be directly or indirectly supported by handlebar 23 independently of handlebar cover 26.

Meter unit 17 includes housing 17a, meter section 16a that displays information relating to the travelling state such as the vehicle speed, circuit board 16b that controls meter section 16a, and lead 16c for inputting a signal representing the travelling state of straddled vehicle 1 and power.

Housing 17a houses meter section 16a and circuit board 16b. The surface of housing 17a that faces the rider is provided with transparent panel 17b so that meter section 16a can be seen. Housing 17a is fixedly supported by handlebar cover 26 in such a manner that transparent panel 17b is exposed to the outside. In other words, meter unit 17 is supported by handlebar 23 through handlebar cover 26. Meter unit 17 may be directly supported by handlebar 23 or may be indirectly supported by handlebar 23 through another member.

Meter unit 17 is an electric meter, and receives a signal representing the rotational speed of front wheel 11 through lead 16c. The signal representing the rotational speed may be a signal directly output from the rotation sensor of front wheel 11, or a signal supplied to meter unit 17 from an ECU (electricity control unit) that has received a signal of the rotation sensor of front wheel 11.

Highly-directional light unit 19 emits light toward the front of the vehicle, and forms a light distribution of a main beam or a dipped beam. Highly-directional light unit 19 is fixed to fixing section 26b of handlebar cover 26. In other words, highly-directional light unit 19 is supported by handlebar 23 through handlebar cover 26. Highly-directional light unit 19 may be directly supported by handlebar 23 or indirectly supported by handlebar 23 through another member. Highly-directional light unit 19 causes light to pass through transparent light cover 26a and emits light toward the front of the vehicle.

Here, the main beam refers to a beam that radiates light onto a region of the same level or higher than that of the center of highly-directional light unit 19 in illumination of the headlight that illuminates forward of the vehicle to allow straddled vehicle 1 to travel even in the darkness. On the other hand, the dipped beam refers to a beam in which light radiated at a height equal to or higher than that of the center of highly-directional light unit 19 is limited in illumination of the headlight that illuminates forward of the vehicle to allow straddled vehicle 1 to travel even in the darkness so as not to dazzle the driver of the vehicle coming on the opposite side.

Meter unit 17, highly-directional light unit 19 and handlebar cover 26 turn integrally with handlebar 23 when handlebar 23 turns around the shaft center of steering shaft 8.

### <Highly-directional light unit>

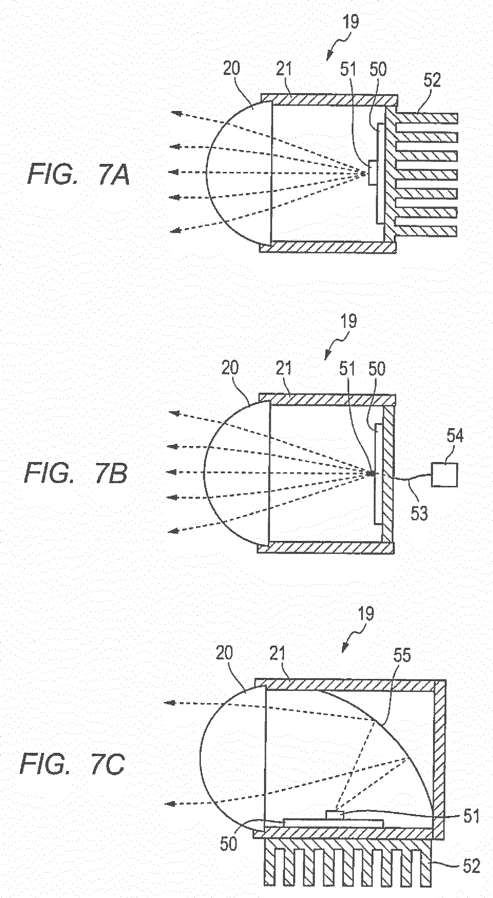

Here, specific configuration examples of highly-directional light unit 19 will be described with reference to FIG. 7A to FIG. 7C. FIG. 7A to FIG. 7C are side views of highly-directional light unit 19.

Highly-directional light unit 19 shown in FIG. 7A to FIG 7C is a module including one highly-directional light-emitting section 51 and one optical lens section 20. The term "module" means components that are replaceable as a single unit.

As shown in FIG. 7A, highly-directional light unit 19 is provided with substrate 50 in the rear of body 21 in the front-rear direction of body frame 2. First light-emitting section 51 is disposed on an inner side surface of case 21 of substrate 50 and heat sink 52 is disposed on an outer side surface of case 21 of substrate 50.

In FIG. 7A, highly-directional light-emitting section 51 is an LED (light emitting diode) formed in a semiconductor chip and emits a highly-directional light, for example. Optical lens section 20 refracts light of highly-directional light-emitting section 51 and forms a light distribution. Light radiated outward from optical lens section 20 makes up at least part of a main beam or a dipped beam. Note that optical lens section 20 and highly-directional light-emitting section 51 may or may not be modularized.

Highly-directional light unit 19 may have a configuration shown in FIG. 7B or FIG. 7C.

In the configuration shown in FIG. 7B, substrate 50 holds highly-directional light-emitting section 51 which is one end of optical fiber 53. Light source 54 is connected at the other end of optical fiber 53. Light source 54 is a semiconductor laser formed in a semiconductor chip, for example.

In the configuration shown in FIG. 7C, substrate 50, highly-directional light-emitting section 51 (e.g., LED) and heat sink 52 are arranged on a side surface of case 21. Reflector 55 that reflects light of highly-directional light-emitting section 51 is disposed in case 21.

As shown in FIG. 6, outer periphery cover 44 that surrounds the periphery of optical lens section 20 on the rear side in the front-rear direction of body frame 2, and main body seal 45 that seals housing 21 and heat sink 52 are attached to highly-directional light unit 19, and fixed to handlebar cover 26. Main body seal 45 is formed of a resin such as rubber, for example.

### <Effect of Embodiment 1>

As described above, in straddled vehicle 1 of Embodiment 1, first, highly-directional light unit 19 that forms a light distribution of at least part of a main beam or a dipped beam includes optical lens section 20 configured to refract light of highly-directional light-emitting section 51 and form a light distribution. When refracting and emitting light of highly-directional light-emitting section 51 to the outside, optical lens section 20 allows the light to pass through the lens while causing part of the light to diffuse due to the nature of the lens material. Thus, with this diffusion light, optical lens section 20 itself appears to glow.

According to straddled vehicle 1 of Embodiment 1, first, the optical lens section 20 that appears to glow is supported by handlebar 23 and disposed at such a height that it turns integrally with handlebar 23. In addition, optical lens section 20 has a size that allows for formation of a light distribution of at least part of a main beam or a dipped beam. Optical lens section 20 that has the above-mentioned size and appears to glow is disposed at such a height that it turns integrally with handlebar 23, and thus the visibility from the outside of straddled vehicle 1 is improved. In comparison with a project-type headlight having an optical lens section and a valve-type light emission section for emitting low-directional light, the size of optical lens section 20 is small in highly-directional light unit 19. In a common technical sense, downsizing of optical lens section 20 results in degradation of the visibility from the outside. It was found, however, that, with optical light unit 20 that refracts highly-directional light to form a light distribution, optical lens section 20 itself appears to glow, and thus the visibility from the outside can be sufficiently ensured even when optical lens section 20 has a small size.

Further, according to straddled vehicle 1 of Embodiment 1, optical lens section 20 forms a light distribution by refraction of light, and this light distribution serves as at least part of a light distribution of a main beam or a dipped beam. Thus, optical lens section 20 of highly-directional light unit 19 as viewed from the front of body frame 2 can be downsized in comparison with a reflector that uses a reflector to form a light distribution when the same light distribution is to be formed. In addition, when the same light distribution is to be formed, optical lens section 20 of highly-directional light unit 19 having optical lens section 20 can be downsized in length in the front-rear direction of body frame 2 in comparison with a reflector that uses a reflector to form a light distribution. Since highly-directional light unit 19 of Embodiment 1 utilizes a light source formed in a semiconductor chip, the light source can be downsized and the size of highly-directional light unit 19 is decreased in comparison with a project-type headlight having an optical lens section and a valve-type light emission section for emitting low-directional light. In a project-type headlight, a reflector collects light, and the collected light is transmitted through an optical lens section. As a result, since the reflector has the structure for the light collection, the size of the reflector is increased. Highly-directional light unit 19 of Embodiment 1 is not provided with such a reflector having the structure for the light collection, and therefore is small in comparison with a project-type headlight.

Further, in straddled vehicle 1 of Embodiment 1, meter unit 17 having meter section 16a is disposed in handlebar 23. In addition, handlebar cover 26 that covers at least part of handlebar 23 and at least part of the gap between highly-directional light unit 19 and meter unit 17 is provided. Thus, in comparison with the case where meter unit 17 and highly-directional light unit 19 are each individually covered with a cover, the structure including meter unit 17, highly-directional light unit 19 and handlebar cover 26 can be downsized.

Accordingly, with straddled vehicle 1 of Embodiment 1, it is possible to provide straddled vehicle 1 which can limit an increase in the size of straddled vehicle 1 and improve the visibility from the outside of straddled vehicle 1 while maintaining the light distribution required for straddled vehicle 1.

Further, straddled vehicle I of Embodiment 1 further includes transparent light cover 26a that covers the front of optical lens section 20 of highly-directional light unit 19 in the front-rear direction of body frame 2, and is directly or indirectly supported by handlebar 23 such that it turns integrally with handlebar 23, meter unit 17, highly-directional light unit 19, and handlebar cover 26. Thus, with light cover 26a, the durability of highly-directional light unit 19 including optical lens section 20 and highly-directional light-emitting section 51 can be increased. Since the durability can be increased, it is possible to further reduce the size of the structure of highly-directional light unit 19, handlebar cover 26 and meter unit 17. Consequently, according to Embodiment 1, it is possible to provide straddled vehicle 1 which can limit an increase in the size of straddled vehicle 1 and improve the visibility from the outside of straddled vehicle 1 while maintaining the light distribution required for straddled vehicle 1.

Preferably, straddled vehicle 1 of Embodiment 1 has the positional relationship described below.

### <Positional relationship between highly-directional light unit and meter unit>

First, preferably, rear end EB of optical lens section 20 of highly-directional light unit 19 is located forward of front end EF16 of meter section 16a of meter unit 17 in the front-rear direction of body frame 2 while straddled vehicle 1 is in an upright state as shown in FIG 6.

With this positional relationship, optical lens section 20 is disposed forward in the front-rear direction of the body frame, and thus the visibility from the outside with optical lens section 20 can be improved.

Incidentally, the configuration in which handlebar cover 26 covers at least part of the gap between the headlight and meter unit 17 tends to cause a problem that light of the headlight diffuses in handlebar cover 26 and becomes leaked light from part or a periphery of meter unit 17, which is visually recognized by the rider. However, with the above-mentioned positional relationship, optical lens section 20 forms a light distribution by refraction, and the cross-sectional area of the path of a distributed beam output from handlebar cover 26 toward the front of the vehicle is decreased in comparison with the case where a reflector is used to form a light distribution. Further, with the above-mentioned positional relationship, the rear end of optical lens section 20 of highly-directional light unit 19 is located forward of the front end of meter section 16a of meter unit 17 in the front-rear direction of the body frame, and as a result, the length of the path of the light output toward the front of the vehicle after the formation of the light distribution is shortened. With the above-mentioned positional relationship, the cross-sectional area of the path of the light output toward the front of the vehicle after the formation of the light distribution is decreased, and the length of the path is shortened, and consequently, the factor of diffusing the light in the above-mentioned paths can be reduced. It is to be noted that the light diffusion which is caused when the light is transmitted through optical lens section 20 is small in light amount in comparison with the transmitted light, and therefore, when the diffused light is further diffused and travels toward meter unit 17, the level of the light is negligible as leaked light. Thus, with the above-mentioned positional relationship, the structure of meter unit 17, highly-directional light unit 19, and handlebar cover 26 can be downsized while suppressing leaked light from part or a periphery of meter unit 17.

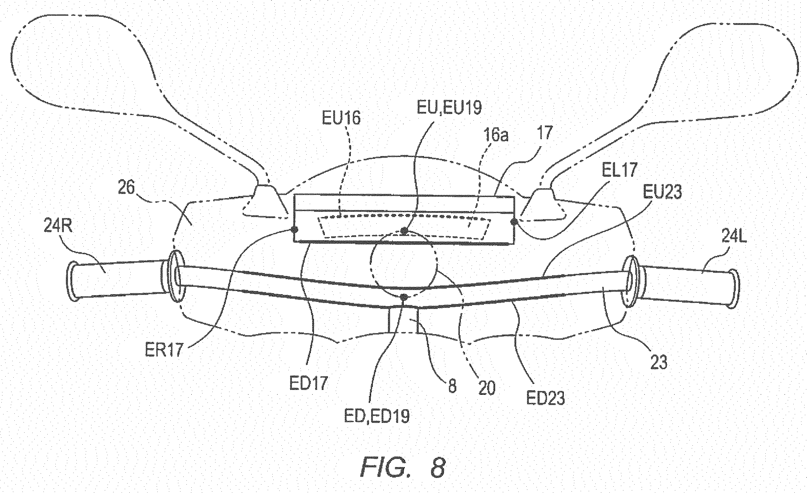

FIG 8 is a front view showing installation positions of the handlebar and the meter unit. In FIG. 8, highly-directional light unit 19 and handlebar cover 26 are illustrated with the two-dotted line, and meter unit 17 and handlebar 23 are illustrated with the solid line. In addition, lower edge ED17 of meter unit 17 is illustrated with the heavy line, upper edge EU16 of the meter section is illustrated with the heavy wavy line, upper edge EU23 of handlebar 23 is illustrated with the heavy line, and lower edge ED23 of handlebar 23 is illustrated with the heavy line.

Next, as shown in FIG. 8, upper end EU of optical lens section 20 of highly-directional light unit 19 is located above the lower edge ED23 of handlebar 23 in the up-down direction of body frame 2.

With this configuration, since optical lens section 20 of highly-directional light unit 19 is disposed at a height equal to or greater than that of handlebar 23, and the visibility from the outside of straddled vehicle 1 is improved. In addition, since optical lens section 20 of highly-directional light unit 19 is disposed at a height equal to or greater than that of handlebar 23, a light distribution of a main beam or a dipped beam can be easily formed in comparison with the case where optical lens section 20 is disposed at a lower position. Thus, with this configuration, it is possible to provide straddled vehicle 1 which can limit an increase in the size of straddled vehicle 1 and improve the visibility from the outside of straddled vehicle 1 while maintaining the light distribution required for straddled vehicle 1.

In addition, as shown in FIG. 8, upper end EU of optical lens section 20 of highly-directional light unit 19 is preferably located above lower edge ED17 of meter unit 17 in the up-down direction of body frame 2.

With this configuration, since optical lens section 20 of highly-directional light unit 19 is disposed at a position equal to or higher than that of meter unit 17 in the up-down direction of body frame 2, the visibility from the outside of straddled vehicle 1 is improved. In addition, since optical lens section 20 of highly-directional light unit 19 is disposed at a position equal to or higher than that of meter unit 17 in the up-down direction of body frame 2, a light distribution of a main beam or a dipped beam can be easily formed in comparison with the case where optical lens section 20 is disposed at a lower position. Thus, with this configuration, it is possible to provide straddled vehicle 1 which can limit an increase in the size of straddled vehicle 1 and improve the visibility from the outside of straddled vehicle 1 while maintaining the light distribution required for straddled vehicle 1.

In addition, as shown in FIG. 8, lower end ED of optical lens section 20 of highly-directional light unit 19 is preferably located below upper edge EU23 of handlebar 23 in the up-down direction of body frame 2.

With this configuration, optical lens section 20 of highly-directional light unit 19 at least part of which is covered by handlebar cover 26 is disposed at a height equal to or lower than that of handlebar 23, and thus it is possible to limit a size increase in the up-down direction of body frame 2 for installation of highly-directional light unit 19 while improving the visibility from the outside of straddled vehicle 1. Thus, with this configuration, it is possible to provide straddled vehicle 1 which can limit an increase in the size of straddled vehicle 1 and improve the visibility from the outside of straddled vehicle 1 while maintaining the light distribution required for straddled vehicle 1.

In addition, as shown in FIG. 8, lower end ED of optical lens section 20 of highly-directional light unit 19 is preferably located below upper edge EF16 of meter section 16a of meter unit 17 in the up-down direction of body frame 2.

With this configuration, optical lens section 20 of highly-directional light unit 19 at least part of which is covered by handlebar cover 26 is disposed at a height equal to or lower than that of meter unit 17. In this manner, it is possible to limit a size increase in the up-down direction of body frame 2 for installation of highly-directional light unit 19. Thus, with this configuration, it is possible to provide straddled vehicle 1 which can limit an increase in the size of straddled vehicle 1 and improve the visibility from the outside of straddled vehicle 1 while maintaining the light distribution required for straddled vehicle 1.

Preferably, as shown in FIG. 6 and FIG. 8, front end EF17 of meter unit 17 is located forward of rear end EB19 of modularized highly-directional light unit 19 in the front-rear direction of body frame 2, and is located rearward of front end EF of optical lens section 20 of highly-directional light unit 19 in the front-rear direction of body frame 2. Further, preferably, lower edge ED 17 of meter unit 17 is located below upper end EU 19 of highly-directional light unit 19 in the up-down direction of body frame 2 downward, and is located above lower end ED19 of highly-directional light unit in the up-down direction of body frame 2. Further, preferably, at least part of highly-directional light unit 19 is located on the right of left end EL17 of meter unit 17 and on the left of right end ER17 of meter unit 17 in the left-right direction of body frame 2.

In an analog meter, an end of a cable that rotates based on the rotation of the wheel is disposed in the meter, and the speed is displayed on the meter by utilizing the rotation of the cable. In contrast, an electric meter utilizes an electric signal representing the travelling state to display the travelling state on meter section 16a. Therefore, in comparison with an analog meter, the thickness of an electric meter is small, and a space is formed at a position below meter unit 17 in the up-down direction of body frame 2. In the above-mentioned configuration, highly-directional light unit 19 is disposed such that the rear portion thereof is included in the space. Thus, the structure of meter unit 17, highly-directional light unit 19 and handlebar cover 26 can be further downsized, and in addition, it is possible to suppress leakage of light of highly-directional light unit 19 to part or a periphery of light meter unit 17. Thus, with this configuration, it is possible to provide straddled vehicle 1 which can limit an increase in the size of straddled vehicle 1 and improve the visibility from the outside of straddled vehicle 1 while maintaining the light distribution required for straddled vehicle 1.

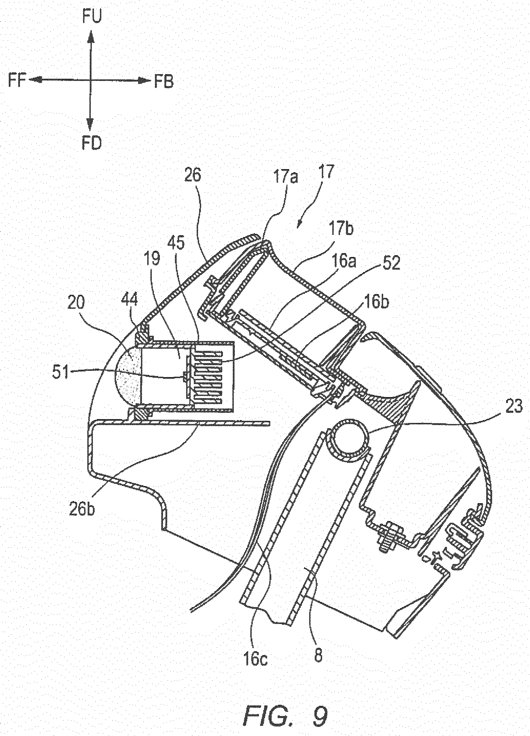

FIG 9 is a longitudinal sectional view showing a modification of the handlebar cover of the straddled vehicle according to Embodiment 1 of the present invention.

It is to be noted that, while handlebar cover 26 of Embodiment 1 has transparent light cover 26a that covers the front of highly-directional light unit 19 in the front-rear direction of the body frame, optical lens section 20 of highly-directional light unit 19 may be exposed to the outside as shown in FIG 9.

In this modification, optical lens section 20 of highly-directional light unit 19 is exposed to the outside of handlebar cover 26, and thus the visibility from the outside of the vehicle can be further improved with optical lens section 20 that appears to glow. Consequently, according to the modification, it is possible to provide straddled vehicle 1 which can limit an increase in the size of straddled vehicle 1 and improve the visibility from the outside of straddled vehicle 1 while maintaining the light distribution required for straddled vehicle 1.

### [Embodiment 2]

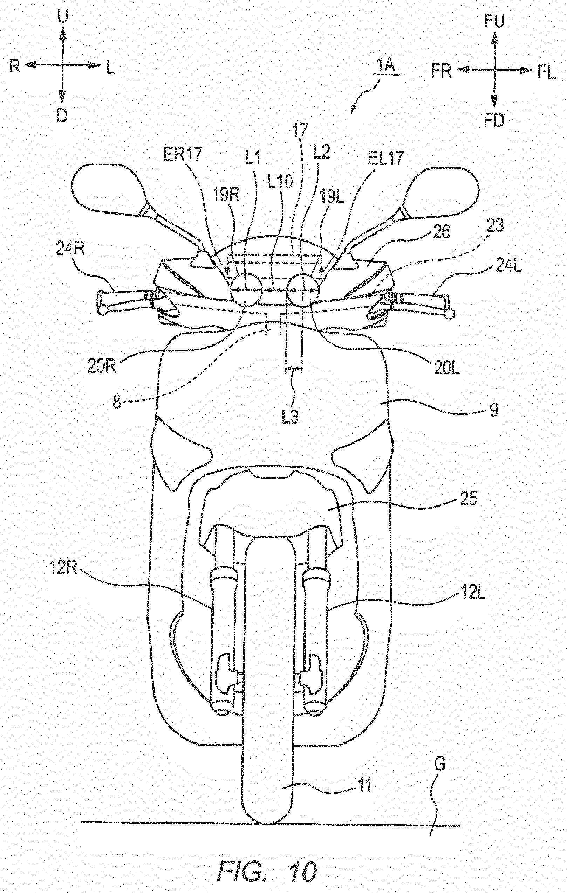

FIG. 10 is a front view showing a straddled vehicle according to Embodiment 2 of the present invention.

Straddled vehicle 1A of Embodiment 2 is an example in which handlebar cover 26 is provided with first highly-directional light unit 19L and second highly-directional light unit 19R. The same components as those of Embodiment 1 are denoted by the same reference numerals, and the descriptions thereof are omitted.

First highly-directional light unit 19L can employ one of the configurations in FIG. 7A to FIG. 7C as with first highly-directional light unit 19 of Embodiment 1. First highly-directional light unit 19L includes first optical lens section 20L. Second highly-directional light unit 19R can employ one of the configurations in FIG. 7A to FIG. 7C as with first highly-directional light unit 19 of Embodiment 1. Second highly-directional light unit 19R includes second optical lens section 20R.

### <Installation positions of first highly-directional light unit and second highly-directional light unit>

First highly-directional light unit 19L is disposed on the left side of steering shaft 8 in the left-right direction of body frame 2. First highly-directional light unit 19L is different from highly-directional light unit 19 of Embodiment 1 in the installation position in the left-right direction of body frame 2.

The positional relationship between first highly-directional light unit 19L and meter unit 17 in the front-rear direction and the up-down direction of body frame 2 is the same as that of Embodiment 1. In addition, the positional relationship between first highly-directional light unit 19L and handlebar 23 in the up-down direction of body frame 2 is the same as that of Embodiment 1.

Second highly-directional light unit 19R is disposed on the right side of steering shaft 8 in the left-right direction of body frame 2. Second highly-directional light unit 19R is different from highly-directional light unit 19 of Embodiment 1 in the installation position in the left-right direction of body frame 2.

The positional relationship between second highly-directional light unit 19R and meter unit 17 in the front-rear direction and the up-down direction of body frame 2 is the same as that of Embodiment 1. In addition, the positional relationship between second highly-directional light unit 19R and handlebar 23 in the up-down direction of body frame 2 is the same as that of Embodiment 1.

As shown in FIG. 10, while straddled vehicle 1 is in an upright state, at least part of first optical lens section 20L is located on the right side of left end EL17 of meter unit 17, and on the left side of right end ER17 of meter unit 17 in the left-right direction of body frame 2. While straddled vehicle 1 is in an upright state, at least part of second optical lens section 20R is located on the right side of left end EL17 of meter unit 17, and on the left side of right end ER17 of meter unit 17 in the left-right direction of body frame 2.

As shown in FIG. 10, as viewed from the front of body frame 2 while straddled vehicle 1 is in an upright state, length L10 between first optical lens section 20L and second optical lens section 20R is longer than L3 that is half a smaller one of minimum width L1 of first optical lens section 20L and minimum width L2 of second optical lens section 20R.

The minimum width of the optical lens section refers to a length corresponding to the minimum interval of two straight lines which sandwich the contour of optical lens section viewed from the front of body frame 2 of straddled vehicle 1 in an upright state from various directions, and are mutually parallel straight lines which do not cross the contour but contact the contour. As viewed from the front of body frame 2 while straddled vehicle 1 is in an upright state, the maximum width and the minimum width are equal to each other when the optical lens section has a true circle shape.

### <Light distribution>

With the light distribution formed by first optical lens section 20L of first highly-directional light unit 19L and the light distribution formed by second optical lens section 20R of second highly-directional light unit 19R, a light distribution of a main beam or a dipped beam is obtained.

In this case, first highly-directional light unit 19L and second highly-directional light unit 19R are simultaneously turned on by a circuit that controls on/off of a power supply. That is, when first highly-directional light unit 19L is in an on state, second highly-directional light unit 19R is in an on state, and when first highly-directional light unit 19L is in an off state, second highly-directional light unit 19R is in an off state.

As described above, according to straddled vehicle 1A of Embodiment 2, first highly-directional light unit 19L and second highly-directional light unit 19R emit the same beam which is a main beam or a dipped beam. Further, first highly-directional light unit 19L and second highly-directional light unit 19R are disposed such that an appropriate interval relative to minimum widths L1 and L2 of first optical lens section 20L and second optical lens section 20R is interposed therebetween, and that the entirety of first optical lens section 20L and second optical lens section 20R falls within the range from left end EL17 to the right end ER17 of meter unit 17 in the left-right direction of body frame 2. Two light emission regions are disposed with a proper space therebetween, and thus the visibility from the outside of the vehicle is improved in comparison with a single highly-directional light unit having the same light emission region. Accordingly, with straddled vehicle 1A of Embodiment 2, it is possible to limit a size increase of the straddled vehicle 1, and to improve the visibility of straddled vehicle 1 from the outside while maintaining the light distribution required for straddled vehicle 1A.

### <Modification of light distribution>

In straddled vehicle 1A shown in FIG. 10, it is possible to adopt a configuration in which the light distribution formed by first optical lens section 20L of first highly-directional light unit 19L is a light distribution of a main beam, and the light distribution formed by second optical lens section 20R of second highly-directional light unit 19R is a light distribution of a dipped beam.

In this case, first highly-directional light unit 19L and second highly-directional light unit 19R are each independently switched between on and off by a circuit that controls the supply and block of the power source.

### <Modification of installation position of highly-directional light unit>

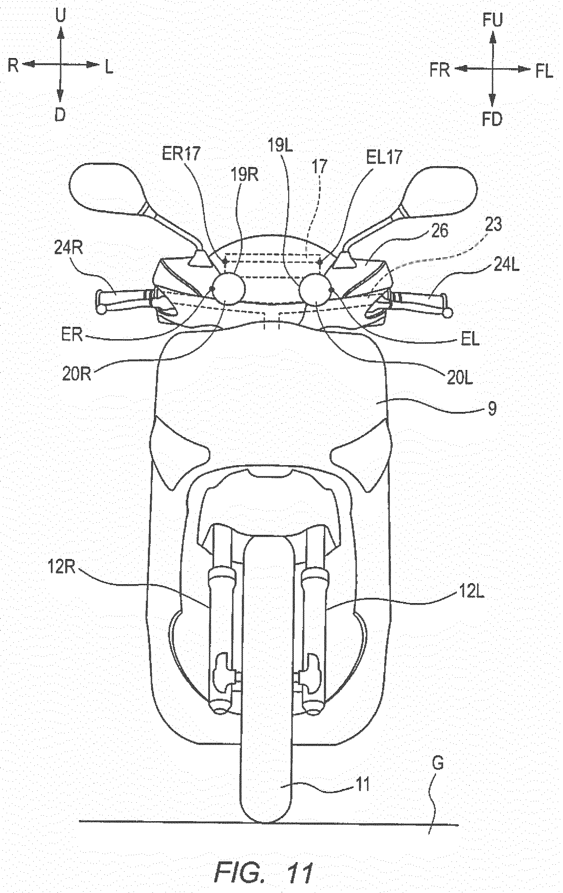

FIG. 11 a front view showing a modification of the installation position of the highly-directional light unit of straddled vehicle 1A according to Embodiment 2 of the present invention.

In Embodiment 2, left end EL of first optical lens section 20L may be located on the left side of left end EL17 of meter unit 17 in the left-right direction of body frame 2 while straddled vehicle 1 is in an upright state. In addition, right end ER of second optical lens section 20R may be located on the right side of right end ER17 of meter unit 17 in the left-right direction of body frame 2 while straddled vehicle 1 is in an upright state.

Also in this case, as shown in FIG 11, at least part of first optical lens section 20L is located on the right side of left end EL17 of meter unit 17, and on the left side of right end ER17 of meter unit 17 in the left-right direction of body frame 2 while straddled vehicle 1 is in an upright state. At least part of second optical lens section 20R is located on the right side of left end EL 17 of meter unit 17, and on the left side of right end ER17 of meter unit 17 in the left-right direction of body frame 2 while straddled vehicle 1 is in an upright state.

### [Embodiment 3]

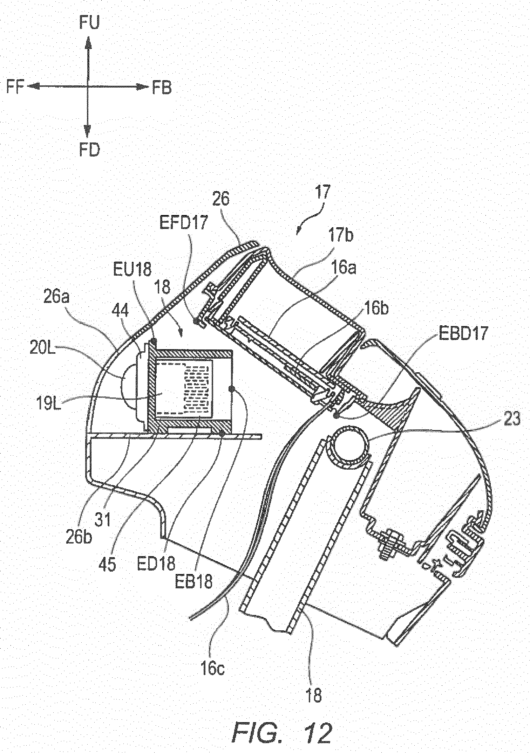

FIG. 12 is a longitudinal sectional view showing the inside of a handlebar cover of a straddled vehicle according to Embodiment 3 of the present invention. As viewed from the front of body frame 2, the straddled vehicle according to Embodiment 3 shown in FIG 10 is the same as that of Embodiment 2.

In Embodiment 3, first highly-directional light unit 19L and second highly-directional light unit 19R are supported by casing 31 and configured as a unit.

The straddled vehicle of Embodiment 3 includes lamp unit 18 disposed in handlebar cover 26. Lamp unit 18 includes first highly-directional light unit 19L, second highly-directional light unit 19R, and casing 31. Casing 31 supports first highly-directional light unit 19L and second highly-directional light unit 19R. Casing 31 is fixed to fixing section 26b of handlebar cover 26.

### <Installation positions of meter unit and lamp unit>

In the straddled vehicle of Embodiment 3, the installation positions of first optical lens section 20L and second optical lens section 20R are the same as those of the straddled vehicle of Embodiment 2.

In the straddled vehicle of Embodiment 3, bottom front end EFD17 of meter unit 17 is located above bottom rear end EBD 17 in the up-down direction of body frame 2. Further, in the front-rear direction of body frame 2, rear end EB18 of lamp unit 18 is located rearward of bottom front end EFD 17 of meter unit 17, and forward of bottom rear end EBD17 of meter unit 17. Further, in the up-down direction of body frame 2, upper end EU 18 of lamp unit 18 is located below bottom front end EFD 17 of meter unit 17, and above bottom rear end EBD17 of meter unit 17. Further, in the left-right direction of body frame 2, at least part of lamp unit 18 is located on the right side of left end EL17 of meter unit 17 (see FIG. 10), and on the left side of right end ER17 of meter unit 17.

In the straddled vehicle of Embodiment 3, a space is formed at a position between bottom front end EFD17 and bottom rear end EBD 17 of meter unit 17 in the up-down direction of body frame 2, and between left end EL17 and right end ER17 of meter unit 17 in the left-right direction of body frame 2. Further, according to Embodiment 3, lamp unit 18 is disposed such that at least the rear portion thereof is included in the space. Thus, the structure of meter unit 17, lamp unit 18 and handlebar cover 26 can be further downsized. Further, it is possible to suppress leakage of light of lamp unit 18 to part or a periphery of meter unit 17. Consequently, according to Embodiment 3, it is possible to provide straddled vehicle 1 which can limit an increase in the size of straddled vehicle 1 and improve the visibility from the outside of straddled vehicle 1 while maintaining the light distribution required for straddled vehicle 1.

### [Embodiment 4]

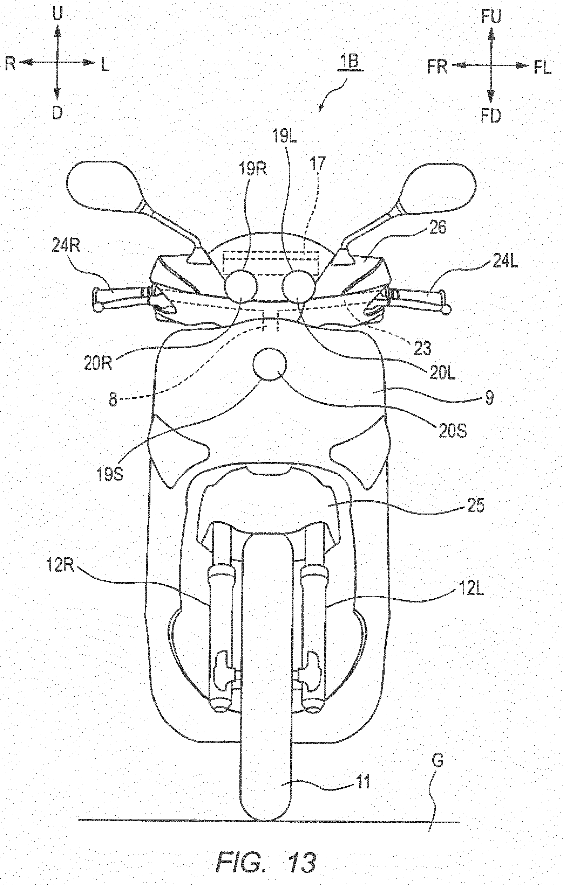

FIG. 13 is a front view showing the straddled vehicle according to Embodiment 4 of the present invention.

Straddled vehicle 1B according to Embodiment 4 is different from that of Embodiment 2 in that third highly-directional light unit 19S is provided, and other components are the same as those of Embodiment 2. The same components as those of Embodiment 2 are denoted by the same reference numerals, and the descriptions thereof are omitted.

Third highly-directional light unit 19S can employ one of the configurations in FIG. 7A to FIG. 7C as with first highly-directional light unit 19 of Embodiment 1. Third highly-directional light unit 19S includes first optical lens section 20S.

Third highly-directional light unit 19S is disposed forward of steering shaft 8 in the front-rear direction of body frame 2. While straddled vehicle I B is in an upright state, third highly-directional light unit 19S is disposed at the center in the left-right direction of body frame 2, and below first highly-directional light unit 19L and second highly-directional light unit 19R in the up-down direction of body frame 2.

Third highly-directional light unit 19S may be supported by body cover 9 or by body frame 2 through a bracket or the like.

Third optical lens section 20S of third highly-directional light unit 19S may be exposed to the outside of body cover 9. Alternatively, a transparent light cover may be provided at a front of third optical lens section 20S of third highly-directional light unit 19S in the front-rear direction of body frame 2. Third highly-directional light unit 19S emits light toward the front of body frame 2 through third optical lens section 20S.

### <Light distribution>

In Embodiment 4, first highly-directional light unit 19L and second highly-directional light unit 19R emit a dipped beam. Third highly-directional light unit 19S emits a main beam. It is possible to adopt a configuration in which first highly-directional light unit 19L and second highly-directional light unit 19R emit a main beam, and third highly-directional light unit 19S emits a dipped beam.

### [Embodiment 5]

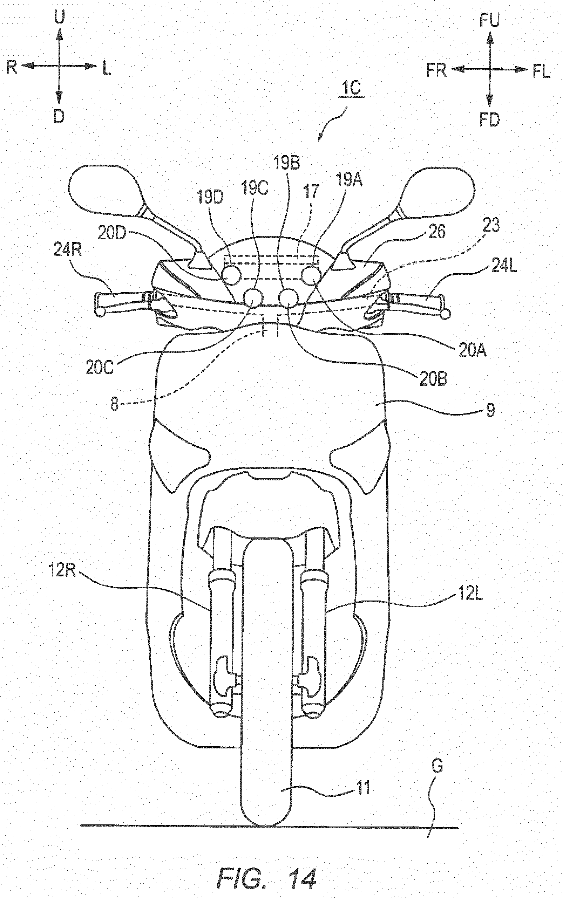

FIG. 14 is a front view showing the straddled vehicle according to Embodiment 5 of the present invention.

Straddled vehicle 1C of Embodiment 5 is different from that of Embodiment 1 in the number and the installation positions of the highly-directional light units, and other components are the same as those of Embodiment 1. The same components as those of Embodiment 1 are denoted by the same reference numerals, and the descriptions thereof are omitted.

Straddled vehicle 1C of Embodiment 5 includes first highly-directional light unit 19A, second highly-directional light unit 19B, third highly-directional light unit 19C, and fourth highly-directional light unit 19D.

Each of first highly-directional light unit 19A to fourth highly-directional light unit 19D adopts one of the configurations in FIG. 7A to FIG. 7C as with first highly-directional light unit 19 of Embodiment 1. First highly-directional light unit 19A includes first optical lens section 20A. Second highly-directional light unit 19B includes second optical lens section 20B. Third highly-directional light unit 19C includes third optical lens section 20C. Fourth highly-directional light unit 19D includes fourth optical lens section 20D.

### <Positional relationship between highly-directional light unit and meter unit>

Rear end EB of each of first optical lens section 20A to fourth optical lens section 20D of first highly-directional light unit 19A to fourth highly-directional light unit 19D is located forward of front end EF16 of meter section 16a of meter unit 17 in the front-rear direction of body frame 2 while straddled vehicle 1C is in an upright state as shown in FIG. 6 of Embodiment 1.

While it is preferable that all of the highly-directional light units (first highly-directional light unit 19A to fourth highly-directional light unit 19D) provided to handlebar cover 26 satisfy the above-mentioned installation condition, at least one of the highly-directional lights may satisfy the installation condition. The highly-directional light unit that satisfies the installation condition achieves the effect same as that of Embodiment 1 that is obtained based on the installation condition.

More preferably, straddled vehicle 1C of Embodiment 5 satisfies the installation condition described below.

First, preferably, the upper end of any of first optical lens section 20A to fourth optical lens section 20D of first highly-directional light unit 19A to fourth highly-directional light unit 19D is located above lower edge ED23 of handlebar 23 (see FIG. 8) in the up-down direction of body frame 2. In the exemplary configuration of FIG. 14, all of first highly-directional light unit 19A to fourth highly-directional light unit 19D satisfy this condition.

In addition, preferably, the upper end of any of first optical lens section 20A to fourth optical lens section 20D of first highly-directional light unit 19A to fourth highly-directional light unit 19D is located above lower edge ED17 of meter unit 17 (see FIG. 8) in the up-down direction of body frame 2. In the exemplary configuration of FIG. 14, first highly-directional light unit 19A and fourth highly-directional light unit 19D satisfy this condition.

In addition, preferably, the lower end of any of first optical lens section 20A to fourth optical lens section 20D of first highly-directional light unit 19A to fourth highly-directional light unit 19D is located below upper edge EU23 of handlebar 23 (see FIG. 8) in the up-down direction of body frame 2. In the exemplary configuration of FIG. 14, second highly-directional light unit 19B and third highly-directional light unit 19C satisfy this condition.

In addition, preferably, the lower end ED of any of first optical lens section 20A to fourth optical lens section 20D of first highly-directional light unit 19A to fourth highly-directional light unit 19D is located below upper edge EF16 of meter section 16a of meter unit 17 (see FIG. 8) in the up-down direction of body frame 2. In the exemplary configuration of FIG 14, second highly-directional light unit 19B and third highly-directional light unit 19C satisfy this condition.

When the above-mentioned installation conditions are satisfied, it is possible to achieve the effect same as that of Embodiment 1 that is obtained based on the installation conditions.

### <Light distribution>

In Embodiment 5, first highly-directional light unit 19A and fourth highly-directional light unit 19D emit a main beam. Second highly-directional light unit 19B and third highly-directional light unit 19C emit a dipped beam.

It is to be noted that the combinations of the highly-directional light units for emitting the main beam and the dipped beam can be variously changed. It is also possible to adopt a configuration in which first highly-directional light unit 19A and fourth highly-directional light unit 19D emit a dipped beam, and second highly-directional light unit 19B and third highly-directional light unit 19C emit a main beam.

Alternatively, it is also possible to adopt a configuration in which first highly-directional light unit 19A and second highly-directional light unit 19B emit a dipped beam, and third highly-directional light unit 19C and fourth highly-directional light unit 19D emit a main beam. Alternatively, it is also possible to adopt a configuration in which first highly-directional light unit 19A and second highly-directional light unit 19B emit a main beam, and third highly-directional light unit 19C and fourth highly-directional light unit 19D emit a dipped beam.

### Each embodiment of the present invention has been described thus far.

While the straddled vehicle having one front wheel is described in the above-mentioned embodiments, it is only necessary to provide the straddled vehicle of the embodiments of the present invention with at least one front wheel, and the straddled vehicle of the embodiments of the present invention may be, for example, a straddled vehicle having a left front wheel and a right front wheel disposed side by side in the left-right direction of body frame 2.

While the electric meter is described as the meter unit in the above-mentioned embodiments, it is only necessary that the meter unit of the embodiments of the present invention includes a meter section that displays information relating to at least the travelling state, and is supported by the handlebar, and, turns integrally with the handlebar. For example, the meter unit of the embodiments of the present invention may be a meter unit having an analog meter.

The above embodiments have been described with the configuration in which, as the highly-directional light unit (the first highly-directional light unit to the fourth highly-directional light unit), the highly-directional light-emitting section is an LED and the optical axis of the highly-directional light-emitting section is oriented toward the optical lens section. The highly-directional light unit of the embodiments of the present invention is not limited to the above-mentioned configuration as long as the highly-directional light unit includes a highly-directional light-emitting section that emits highly-directional light, and an optical lens section that refracts light of the highly-directional light-emitting section and forms a light distribution, the highly-directional light unit is supported by the handlebar and turns integrally with the handlebar and the meter unit, and the light distribution formed by the optical lens section is a light distribution of at least part of a main beam or a dipped beam. For example, a light-emitting end of an optical fiber that guides and emits light of a semiconductor laser may be applied as the highly-directional light-emitting section that emits highly-directional light. A configuration may be adopted in which a reflector is placed between an optical lens section and a highly-directional light-emitting section, and the light emitted from the highly-directional light-emitting section is reflected and sent to the optical lens section.

While the rod-shaped handlebar that is long in the left-right direction of body frame 2 is described in the above-mentioned embodiments, the handlebar of the embodiments of the present invention is not limited to this, as long as the handle turns integrally with the steering shaft, and is long in the left-right direction of the body frame. For example, the handlebar may be a separate handlebar having a left handlebar and a right handlebar, in which the left handlebar is fixed to a left part of the upper bracket and the right handlebar is fixed to a right part of the upper bracket. In the case of the separate handlebar, the structure including a member fixedly coupling the left handlebar and the right handlebar is the handlebar.

In addition, in the above-mentioned embodiments, the handlebar cover is the cover that covers the handlebar in the range including the front, top, and rear of the center portion of the handlebar in the up-down direction and front-rear direction of body frame 2. However, the handlebar cover of the embodiments of the present invention is not limited to this as long as the cover covers at least one highly-directional light unit and at least part of the meter unit and the handlebar, and turns integrally with the meter unit and the handlebar. For example, the handlebar cover may form a gap such that the handlebar can be partially seen. In addition, the handlebar cover may not have an integral structure, and may have a structure which is divided into multiple parts.

In addition, in the straddled vehicle of the embodiments of the present invention, another highly-directional light unit may be provided at another position as long as at least one highly-directional light unit that is provided to turn integrally with the handlebar cover is provided. Preferably, the one or more highly-directional light unit provided to turn integrally with handlebar cover itself has a configuration for emitting a main beam or a dipped beam, or both required for the straddled vehicle.

In addition, in the above-mentioned embodiment, an exemplary configuration where the meter unit is supported by the handlebar through the handlebar cover is described. However, it is only necessary that the meter unit of the embodiments of the present invention is supported by the handlebar. For example, the meter unit may be directly supported by the handlebar or may be indirectly supported by the handlebar through another member.

In addition, in the above-mentioned embodiment, an exemplary configuration where the highly-directional light unit is supported by the handlebar through the handlebar cover is described. However, it is only necessary that the highly-directional light unit of the embodiments of the present invention is supported by the handlebar. For example, the highly-directional light unit may be directly supported by the handlebar or may be indirectly supported by the handlebar through another member.

The present invention can be embodied by a large number of different modes. This disclosure should be construed as providing embodiments of the principle of the present invention. A large number of illustrative embodiments are described here with the understanding that the embodiments are not intended to limit the present invention to the preferred embodiments described and/or illustrated here.

Some illustrative embodiments of the present invention are described here. The present invention is not limited to various preferred embodiments described here. The present invention includes any embodiments including equivalent elements, corrections, deletions, combinations (for example, combinations with features across various embodiments), improvements, and/or changes that can be recognized by those skilled in the art based on this disclosure. The limitations of the appended claims should be broadly interpreted based on the terms used in the appended claims, and the limitations should not be limited by the embodiments described in the present description or in the prosecution of the present application. The embodiments should be construed as non-exclusive. For example, the terms "preferably" and "may" are non-exclusive in this disclosure, meaning "preferable, but not limited to this" and "may be, but not limited to this."

The disclosures of Japanese Patent Applications No. 2014-120235 and No. 2014-120236 both filled on June 11, 2014, and No. 2014-256408 filled on December 18, 2014, including the specifications, drawings, and abstracts are incorporated herein by reference in their entireties.

### Industrial Applicability

The present invention is applicable to a straddled vehicle.

### Reference Signs List

1, 1A, 1B, 1C Straddled vehicle
2 Body frame
4 Seat
5 Power unit
8 Steering shaft
9 Body cover
10 Rear wheel
11 Front wheel
12L Left front-wheel support unit
12R Right front-wheel support unit
15 Bracket
16 Meter section
17 Meter unit
18 Lamp unit
19 Highly-directional light unit
19L First highly-directional light unit
19R Second highly-directional light unit
19S Third highly-directional light unit
19A First highly-directional light unit
19B Second highly-directional light unit
19C Third highly-directional light unit
19D Fourth highly-directional light unit
20 Optical lens section
20L First optical lens section
20R Second optical lens section
20S Third optical lens section
20A First optical lens section
20B Second optical lens section
20C Third optical lens section
20D Fourth optical lens section
21 Housing
23 Handlebar
24L Left grip
24R Right grip
25 Fender
26 Handlebar cover
26a Light cover
50 Substrate
51 Highly-directional light-emitting section
52 Heat sink
L1, L2 Minimum width
L10 Length between first optical lens section and second optical lens section

## Claims

1. A straddled vehicle comprising:
a body frame;
at least one front wheel;
a steering shaft turnably supported by the body frame;
a handlebar configured to turn integrally with the steering shaft, the handlebar being long in a left-right direction of the body frame;
a meter unit supported by the handlebar and configured to turn integrally with the handlebar, the meter unit including a meter section that displays at least information relating to a travelling state;
at least one highly-directional light unit supported by the handlebar and configured to turn integrally with the handlebar and the meter unit, the at least one highly-directional light unit including a highly-directional light-emitting section configured to emit highly-directional light, and an optical lens section configured to refract light of the highly-directional light-emitting section to form a light distribution, the light distribution formed by the optical lens section being a light distribution of at least part of a main beam or a dipped beam; and
a handlebar cover configured to cover at least part of each of the at least one highly-directional light unit, the meter unit and the handlebar, and turn integrally with the meter unit and the handlebar.

2. The straddled vehicle according to claim 1, wherein a rear end of the optical lens section of the at least one highly-directional light unit is located forward of a front end of the meter section of the meter unit in a front-rear direction of the body frame when the handlebar is not steered.

3. The straddled vehicle according to claim 1, wherein an upper end of the optical lens section of the at least one highly-directional light unit is located above a lower edge of the handlebar in an up-down direction of the body frame.

4. The straddled vehicle according to claim 1, wherein an upper end of the optical lens section of the at least one highly-directional light unit is located above a lower edge of the meter unit in an up-down direction of the body frame.

5. The straddled vehicle according to claim 1, wherein a lower end of the optical lens section of the at least one highly-directional light unit is located below an upper edge of the handlebar in an up-down direction of the body frame.

6. The straddled vehicle according to claim 1, wherein a lower end of the optical lens section of the at least one highly-directional light unit is located below an upper edge of the meter section of the meter unit in an up-down direction of the body frame.

7. The straddled vehicle according to claim 1 further comprising a lamp unit including the highly-directional light unit, wherein:
a front end of a bottom part of the meter unit is located above a rear end of the bottom part in an up-down direction of the body frame;
a rear end of the lamp unit is located rearward of the front end of the bottom part of the meter unit and forward of the rear end of the bottom part of the meter unit in a front-rear direction of the body frame when the handlebar is not steered;
an upper end of the lamp unit is located below the front end of the bottom part of the meter unit and above the rear end of the bottom part of the meter unit in an up-down direction of the body frame when the handlebar is not steered; and
at least part of the lamp unit is located on a right side of a left end the meter unit and on a left side of a right end of the meter unit in the left-right direction of the body frame when the handlebar is not steered.

8. The straddled vehicle according to claim 1, wherein:
the meter unit includes an electric meter configured to receive an electric signal representing a travelling state and display the travelling state on the meter section;
a front end of the meter unit is located forward of a rear end of the at least one highly-directional light unit and rearward of a front end of the optical lens section of the at least one highly-directional light unit in a front-rear direction of the body frame when the handlebar is not steered;
a lower edge of the meter unit is located below an upper end of the at least one highly-directional light unit and above a lower end of the at least one highly-directional light unit in an up-down direction of the body frame; and
at least part of the at least one highly-directional light unit is located on a right side of a left end of the meter unit and on a left side of a right end of the meter unit in the left-right direction of the body frame when the handlebar is not steered.

9. The straddled vehicle according to claim 1 further comprising a transparent light cover supported by the handlebar, the light cover being configured to cover a front of the optical lens section of the at least one highly-directional light unit in a front-rear direction of the body frame, and turn integrally with the handlebar, the meter unit, the at least one highly-directional light unit, and the handlebar cover.

10. The straddled vehicle according to claim 1, wherein the optical lens section of the at least one highly-directional light unit is exposed to an outside of the handlebar cover.

11. The straddled vehicle according to claim 1, wherein:
the at least one highly-directional light unit includes a first highly-directional light unit in which a light distribution formed by a first optical lens section serving as the optical lens section is a light distribution of at least part of one of a main beam and a dipped beam, and a second highly-directional light unit in which a light distribution formed by a second optical lens section serving as the optical lens section is a light distribution of at least part of a beam identical to the one of the main beam and the dipped beam of the first highly-directional light unit;
at least part of the first optical lens section is located on a right side of a left end of the meter unit and on a left side of a right end of the meter unit in the left-right direction of the body frame when the handlebar is not steered;
at least part of the second optical lens section is located on a right side of the left end of the meter unit and on a left side of the right end of the meter unit in the left-right direction of the body frame when the handlebar is not steered; and
a length between the first optical lens section and the second optical lens section is greater than half a smaller one of a minimum width of the first optical lens section and a minimum width of the second optical lens section as viewed from a front side of the body frame when the handlebar is not steered.
